Europäisches Patentamt

(19) European Patent Office

Office européen des brevets

(11) Numéro de publication: **0 119 127**
**A1**

(12) ## DEMANDE DE BREVET EUROPEEN

(21) Numéro de dépôt: **84400391.3**

(22) Date de dépôt: **28.02.84**

(51) Int. Cl.³: **A 01 J 25/12**
**A 01 J 25/13**

(30) Priorité: **09.03.83 FR 8303814**

(43) Date de publication de la demande:
**19.09.84 Bulletin 84/38**

(84) Etats contractants désignés:
**AT BE CH DE GB IT LI NL**

(71) Demandeur: **PIERRE GUERIN S.A.**
**B.P. 12**
**F-79210 Mauze sur le Mignon(FR)**

(72) Inventeur: **Quilliou, Guy**
**20, Square des Frères Montgolfier**
**F-79000 Niort(FR)**

(74) Mandataire: **Fontanié, Etienne**
**FIVES-CAIL BABCOCK 7, rue Montalivet**
**F-75383 Paris Cedex 08(FR)**

(54) **Machine pour la mise en moules de pains de caillé.**

(57) L'invention concerne la mise en moules de pains de caillé produits au moyen d'un bac de pré-pressage et de découpage pour la fabrication de fromages à pâte pressée.

La machine objet de l'invention permet d'automatiser cette opération pour réduire sa durée et le personnel nécessaire. Cette machine comporte un support plan horizontal (12), un élément de formage fixe (14) placé au-dessus dudit support, un élément de formage mobile (16), ces deux éléments formant, lorsqu'ils sont assemblés, une série d'alvéoles cylindriques dont le fond est constitué par ledit support et dont la section est pratiquement identique à celle des moules, des moyens (72, 78, 82, 84, 86, 88) pour écarter et rapprocher l'un de l'autre les éléments de formage, des moyens (10, 46, 50) pour amener les pains de caillé entre les éléments de formage lorsque ceux-ci sont écartés l'un de l'autre, des moyens (18) pour amener les moules (20) sous ledit support plan (12) en alignement avec les dites alvéoles, et des moyens (60, 62, 64, 66) pour déplacer ledit support dans son plan de façon à dégager complètement l'ouverture inférieure desdites alvéoles.

./...

EP 0 119 127 A1

FIG.1

0119127

Machine pour la mise en moules de pains de caillé.

La présente invention a pour objet une machine pour la mise en moules de pains de caillé produits au moyen d'un bac mécanisé de pré-pressage et de découpage de caillé pour la fabrication de fromages à pâte pressée.

Les pains de caillé, de forme parallélépipédique, obtenus par découpage du gâteau de caillé produit dans le bac, doivent être mis dans des moules généralement circulaires où ils sont soumis à un nouveau pressage. Cette mise en moules est habituellement effectuée manuellement et nécessite un temps relativement long ou un personnel nombreux.

Le but de la présente invention est d'automatiser cette opération pour réduire sa durée et permettre une économie de personnel.

La machine pour la mise en moules de pains de caillé objet de l'invention est caractérisée en ce qu'elle comporte un support plan horizontal, un élément de formage fixe placé au-dessus dudit support, un élément de formage mobile, ces deux éléments formant lorsqu'ils sont assemblés une série d'alvéoles cylindriques dont le fond est constitué par ledit support et dont la section est pratiquement identique à celle des moules, des moyens pour écarter et rapprocher les éléments de formage, des moyens pour amener les pains de caillé entre les éléments de formage lorsque ceux-ci sont écartés, des moyens pour amener des moules sous ledit support plan, en alignement avec lesdites alvéoles, et des moyens pour déplacer ledit support dans son plan de façon à dégager complètement l'ouverture inférieure des dites alvéoles.

Pour transférer les pains de caillé du bac sur ledit support plan, on utilise un plateau mobile qui est d'abord placé au niveau de la table de sortie du bac, de sorte que lorsque le tapis du bac avance d'un pas les pains de caillé

0119127

sont poussés sur le plateau par le gâteau de caillé, et qui est ensuite écarté de ladite table et amené dans le plan dudit support et bord à bord avec celui-ci. Le plateau peut, par exemple être supporté par des leviers formant un parallélogramme articulé et dont la rotation est commandée par des vérins.

A la sortie du bac, les pains d'une même rangée sont jointifs et il faut les séparer pour que leur écartement corresponde à celui des alvéoles de formage et des moules. Pour cela, le plateau est formé de plusieurs palettes dont le nombre est égal à celui des pains dans chaque rangée et qui sont disposées de telle sorte que, lorsqu'elles sont jointives, leurs bords coïncident avec ceux des pains qu'elles supportent, et des moyens sont prévus pour écarter les palettes de la distance voulue, après que chaque pain ait été chargé sur une palette. Suivant un mode de réalisation particulier, les palettes sont montées côte à côte sur deux longerons parallèles de façon à pouvoir être déplacées le long de ceux-ci, chaque palette est reliée à la palette voisine par un tirant autorisant un déplacement relatif limité, correspondant à l'écartement souhaité, des deux palettes et au moins un vérin agissant sur les palettes extrêmes permet de maintenir les palettes jointives ou écartées les unes des autres.

Les pains de la dernière rangée sortant du bac ne sont pas poussés sur les palettes et il est donc nécessaire de prévoir des moyens pour les charger sur celles-ci. On peut, par exemple, monter les palettes sur des glissières et les déplacer vers le bac au moyen de vérins pour les insérer entre les pains de caillé et la table de sortie du bac. Les palettes seront avantageusement accouplées par des tenons logés dans des mortaises de façon à permettre un déplacement en synchronisme des palettes tout en leur permettant de s'écarter l'une de l'autre. Cette disposition permet en outre de déplacer plusieurs palettes à l'aide d'un seul vérin.

Etant donné qu'on peut produire avec un même bac des pains de dimensions différentes et que, par conséquent, le nombre de pains dans chaque rangée peut varier, il est important de pouvoir changer facilement les palettes dont le nombre et les dimensions dépendent de ceux des pains de caillé. Pour cela il est avantageux de monter les palettes et les vérins qui commandent leur déplacement sur un châssis amovible et de remplacer cet ensemble par un autre ensemble adapté à la nouvelle production du bac. Les éléments de formage fixe et mobile peuvent aussi être remplacés pour adapter la machine à la production du bac.

Pour transférer les pains de caillé du plateau sur ledit support plan, on utilisera avantageusement l'élément de formage mobile. A cette fin, des moyens sont prévus pour écarter verticalement cet élément du plateau pour permettre le passage des pains de caillé au cours de leur transfert de la table de sortie du bac sur le plateau, pour l'amener ensuite sur le plateau et pour le déplacer vers l'élément de formage fixe en entraînant les pains de caillé. L'élément de formage mobile pourra, par exemple, être porté par deux bras pivotants, montés sur un chariot et dont la rotation est commandée par des vérins, ledit chariot pouvant être déplacé en translation alternativement dans un sens et dans l'autre pour rapprocher les deux éléments de formage et pour les écarter.

De préférence, on adoptera une vitesse de déplacement rapide pendant la majeure partie de la course de l'élément de formage mobile vers l'élément de formage fixe et une vitesse beaucoup plus lente pendant la dernière partie de cette course au cours de laquelle les pains de caillé sont déformés pour prendre la forme des alvéoles des éléments de formage. Le chariot peut, par exemple, être tracté par une ou plusieurs chaînes engrènant avec des roues dentées fixées sur un arbre moteur ; pour les déplacements à vitesse rapide, cet arbre est entraîné en rotation par un groupe moto-réducteur, et pour les déplacements à vitesse lente

l'arbre est mis en rotation par un vérin agissant sur un bras solidaire du carter du moto-réducteur, celui-ci étant muni d'un frein permettant de solidariser l'arbre et le carter lorsque le moteur n'est pas alimenté.

Ledit support plan peut être formé de deux trappes dont les bords attenants se trouvent dans le plan de jonction des éléments de formage et qui peuvent être écartées symétriquement de ce plan pour dégager l'ouverture inférieure des alvéoles formées par lesdits éléments. Les trappes peuvent être munies de galets roulant sur des rails disposés perpendiculairement audit plan et pour les déplacer on peut utiliser, par exemple, un système de bielles et manivelles actionné par un vérin et conçu de telle sorte que les trappes soient toujours déplacées en ·sens inverses et à la même vitesse.

Les moules sont amenés sous ledit support plan par un transporteur, par exemple à bande sans fin, qui est équipé de guides et de butées permettant de positionner correctement les moules sous les alvéoles des éléments de formage. De préférence, le transporteur sera monté sur un châssis déplaçable verticalement de façon qu'il soit possible de le placer dans une position haute pour la mise en moules des pains de caillé et dans une position basse pour l'amenée et l'évacuation des moules. Le châssis du transporteur peut, par exemple, être supporté par des bras pivotants formant un parallélogramme articulé et dont la rotation est commandée par un ou plusieurs vérins.

Des poussoirs peuvent être prévus pour transférer les pains de caillé des alévoles des éléments de formage dans les moules. Ces poussoirs peuvent être actionnés par des vérins et portés par l'élément de formage fixe ou mobile.

D'autres caractéristiques de l'invention apparaîtront à la lecture de la description qui suit et se réfère aux dessins l'accompagnant qui montrent, à titre d'exemple non- limitatif un mode de réalisation de l'invention et sur lesquels :

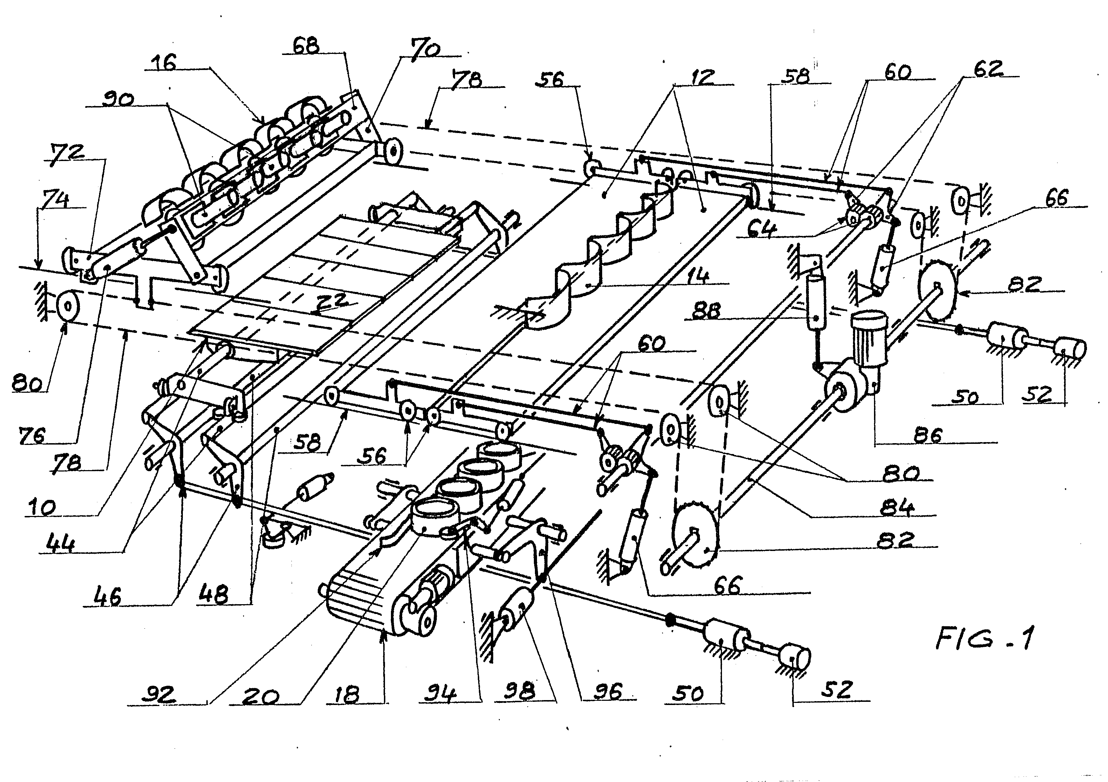

La figure 1 donne une représentation schématique de la machine objet de l'invention ;

La figure 2 est une vue en élévation du plateau écarteur de la machine ;

La figure 3 est une vue en plan et coupe du plateau écarteur ; et

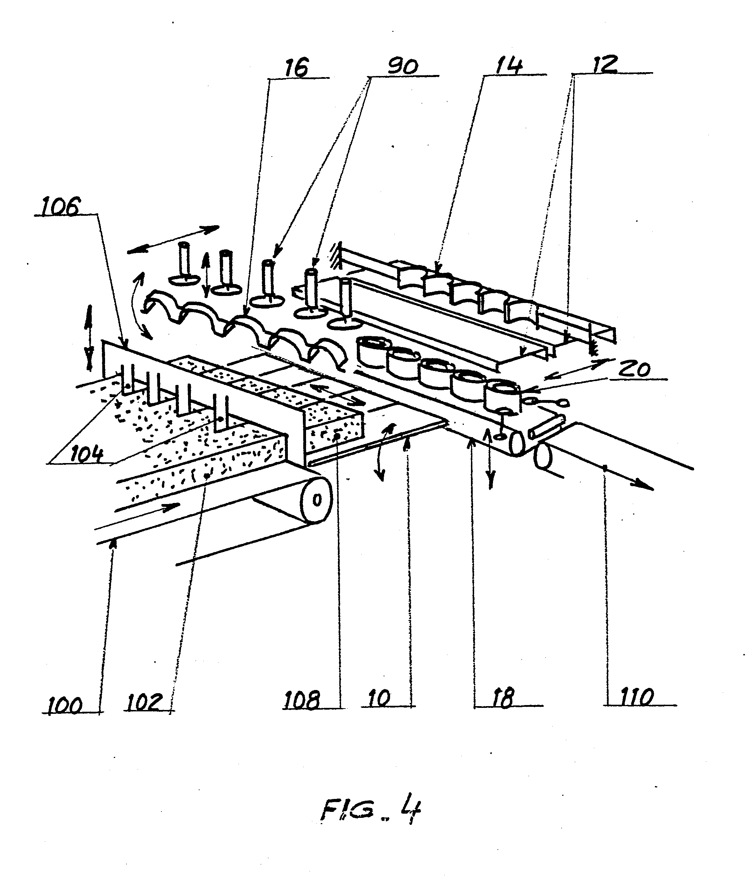

La figure 4 est un schéma illustrant le fonctionnement de la machine.

La machine représentée comprend essentiellement un plateau écarteur 10, deux trappes 12 formant un support plan horizontal, un élément de formage fixe 14, un élément de formage mobile 16, et un transporteur à bande sans fin 18 pour l'amenée et l'évacuation des moules 20.

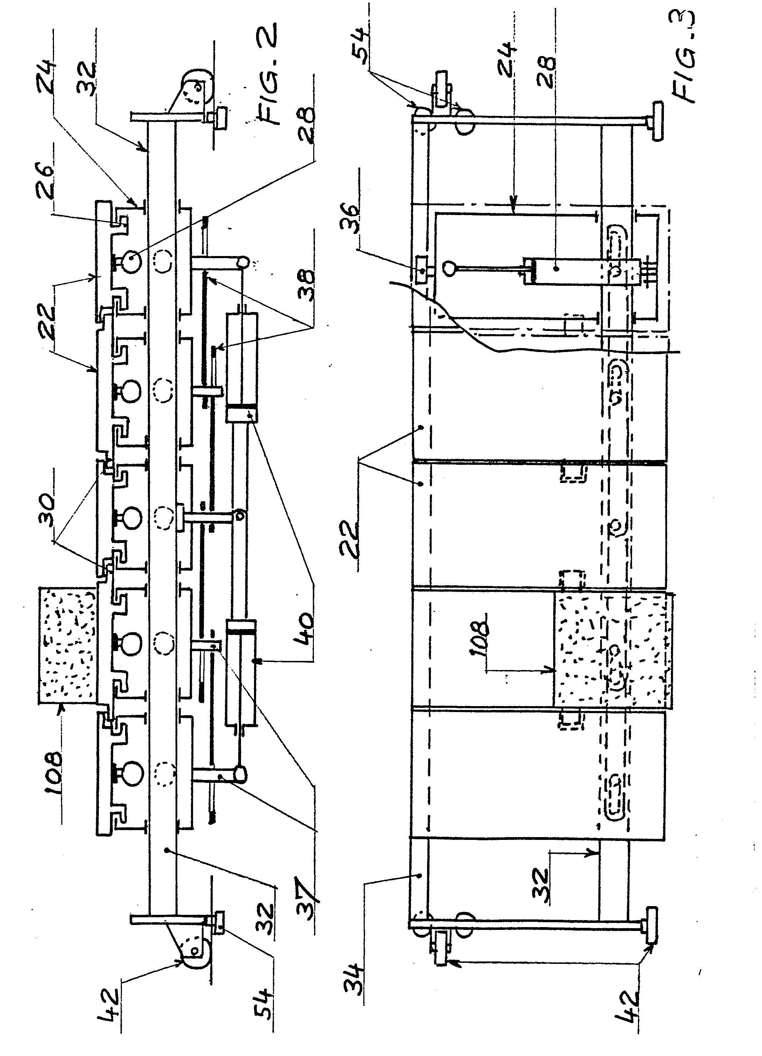

Le plateau écarteur représenté en détails et à grande échelle sur les figures 2 et 3 est formé d'une série de palettes 22 placées côte à côte et dont le nombre et la largeur sont égaux à ceux des pains de caillé produits par le bac à fromage à chaque avance du tapis. Chaque palette est montée sur un cadre 24 et est munie sur sa face inférieure de pattes de retenue 26 lui permettant de glisser longitudinalement sur son cadre.

Le déplacement des palettes sur leur cadre est commandé par des vérins 28, et des tenons 30 engagés dans des logements complémentaires des palettes voisines permettent de déplacer toutes les palettes en synchronisme.

Chaque cadre est supporté, d'une part, par un longeron 32 sur lequel il est monté glissant et, d'autre part, par un second longeron 34, parallèle au premier sur lequel il prend appui par l'intermédiaire d'un galet 36, de sorte qu'il peut être déplacé transversalement, le long des longerons 32 et 34. A leur partie inférieure, les cadres sont munis d'un appendice 37, et des tirants 38 relient entre eux les appendices de deux cadres voisins. Ces tirants sont conçus pour autoriser un écartement limité des palettes. Dans le mode de réalisation représenté ils sont constitués par des fers plats comportant à une de leurs extrémités une fente longitudinale ; ils pourraient aussi être constitués par des liens souples. Deux vérins 40 liés aux appendices de la palette centrale et des palettes d'extrémité permettent de maintenir les palettes jointives et de les écarter à volonté.

Les deux longerons 32 et 34 sont reliés à leurs extrémités par des entretoises pour former un châssis qui est muni de galets 42 par l'intermédiaire desquels le plateau repose sur un support mobile constitué par deux tubes parallèles 44 disposés transversalement et dont les extrémités sont fixées à des leviers coudés 46 solidaires de deux arbres 48 parallèles aux tubes 44. Les leviers 46 sont reliés entre eux par des bielles, et des vérins 50 et 52, dont les courses sont différentes pour des raisons qui seront expliquées plus loin, permettent de déplacer le support formé par les tubes 44 et, par conséquent, le plateau écarteur 10, verticalement et longitudinalement.

Des galets 54 disposés de part et d'autre de l'un des tubes 44 et un système de verrouillage non représenté maintiennent le plateau écarteur sur son support.

Les trappes 12 sont constituées par des panneaux rectangulaires disposés horizontalement dans le même plan et munis à leurs extrémités de galets 56 roulant sur des rails longitudinaux 58. Ces trappes sont attelées à l'aide de bielles 60 à des manivelles 62 dont les arbres sont accouplés au moyen de pignons 64 de telle sorte qu'elles se déplacent toujours en sens inverses et à la même vitesse ; deux vérins 66 commandant la rotation des manivelles permettent d'amener les trappes bord à bord ou de les écarter, suivant le sens de rotation.

Les éléments de formage 14 et 16 se composent chacun d'une série de demi-cylindres reliés entre eux par des bandes étroites de telle sorte que, lorsqu'ils sont assemblés, les deux éléments forment une rangée d'alvéoles cylindriques à axe vertical dont le fond est constitué par les trappes 12 placées bord à bord : dans cette position les bords attenants des trappes sont situés dans le plan de jonction des deux éléments de formage.

L'élément de formage 14 est fixé sur le bâti, non représenté, de la machine de façon à pouvoir être facilement démonté et remplacé par un autre élément. Son bord inférieur se trouve à faible distance de la trappe correspondante et peut même être en contact avec celle-ci si les matériaux qui les constituent permettent un glissement à frottement doux.

L'élément de formage 16 est fixé de façon à pouvoir être facilement démonté et remplacé sous une poutre 68 portée par deux bras 70 montés pivotants sur un chariot 72 déplaçable sur des rails longitudinaux 74. Des vérins 76 agissant sur les bras 70 permettent d'amener l'élément 16 au niveau de l'élément 14 ou de le relever pour permettre le passage des pains de caillé. Le chariot 72 est tracté le long des rails par deux chaînes 78 passant sur des roues de renvoi 80 et sur des roues motrices 82. Ces dernières sont clavetées sur un arbre 84 qui peut être entraîné en rotation par un groupe moto-réducteur 86 dont le carter est monté fou sur l'arbre et est muni d'un bras de réaction lié au bâti de la machine par un vérin 88. Le groupe 86 est équipé d'un frein permettant de solidariser le carter et l'arbre. Pour déplacer le chariot 72 à grande vitesse on alimente le moteur du groupe, le frein étant inactif et le vérin 88 étant bloqué ; pour les déplacements à faible vitesse on serre le frein du groupe et on commande le vérin pour faire tourner l'arbre 84 dans le sens voulu.

La poutre 68 porte également une série de poussoirs 90 constitués par des disques actionnés par des vérins et disposés dans l'axe des demi-cylindres de l'élément de formage 16, au-dessus de celui-ci, de façon à pouvoir pénétrer dans les alvéoles formées par la réunion des deux éléments de formage et en expulser les pains de caillé par le bas, après ouverture des trappes 12.

Le transporteur à bande sans fin 18 est placé sous les trappes 12 et disposé parallèlement à leurs grands côtés. Des guides 92 et des butées éclipsables 94 sont prévues pour amener les moules 20 au-dessous des alvéoles formées par jonction des deux éléments de formage et pour les y maintenir pendant la mise en moule des pains de caillé.

Le châssis du transporteur est supporté par des leviers coudés 96 formant un parallélogramme articulé, et des vérins 98 permettent de faire pivoter ces leviers pour amener le transporteur dans une position haute telle que le bord supérieur des moules se trouve juste au-dessous des trappes ou au contact de celles-ci, ou dans une position basse pour amener les moules et pour les évacuer.

Cette machine est placée à la sortie d'un bac à fromage automatisé du type décrit dans le brevet français N° 81.000.611. Dans ce bac, dont le fond est constitué par un tapis sans fin perméable 100, le caillé est pressé pour former un gâteau 102 qui est ensuite extrait du bac en faisant avancer le tapis pas à pas. A chque avance du tapis, le gâteau est découpé en bandes par des couteaux 104 et en fin d'avance un couteau transversal 106 découpe les bandes en pains parallélépipédiques 108. Avec un même bac, on peut produire des pains de différentes dimensions en changeant le nombre de couteaux 104 et le pas du tapis 100.

Au début d'un cycle de la machine, le plateau écarteur 10 se trouve au niveau de la table de sortie du bac de façon à former avec celle-ci une surface continue. A chaque avance du tapis 100, les pains se trouvant sur la table de sortie sont poussés par le gâteau de caillé sur le plateau 10. La largeur des palettes 22 est égale à celle des pains et leurs bords sont situés dans les mêmes plans verticaux que ceux des pains de sorte que chaque pain vient se placer sans déborder sur la palette située devant lui. Les vérins 50 sont alors alimentés pour écarter le plateau 10 du bac et simultanément l'amener au niveau des trappes 12 et bord-à-bord avec la trappe avant. Avant la fin de cette opération, les vérins 40 sont alimentés pour écarter les palettes ; ce mouvement est nécessaire pour amener les pains de caillé en alignement avec les demi-alvéoles des éléments de formage. L'élément de formage 16 est ensuite abaissé au moyen des vérins 76 pour le placer derrière les pains 108 et le moto-réducteur 86 est mis en marche pour déplacer le chariot 72 vers l'avant ; au cours de ce déplacement l'élément 16 entraîne les pains de caillé en les faisant glisser sur les palettes 22 puis sur les trappes 12. Pendant ces opérations, des moules vides 20 ont été amenés en position de remplissage, sous les trappes 12, par le transporteur 18 qui se trouve alors en position basse.

Lorsque les pains de caillé entrent en contact avec l'élément 14, on arrête le groupe 86 et on alimente le vérin 88 pour déplacer lentement le chariot 72 ; c'est pendant cette dernière partie de la course du chariot que les pains prennent la forme des alvéoles des éléments 14 et 16 et cette opération doit être effectuée lentement. Simultanément, le transporteur 18 est amené en position haute au moyen des vérins 98, les palettes 22 sont rapprochées et le plateau 10 est ramené dans sa position initiale.

Dès que l'élément 16 arrive au contact de l'élément 14, les trappes 12 sont ouvertes, à l'aide des vérins 66, de façon à dégager complètement l'ouverture inférieure des alvéoles. Les pains de caillé peuvent alors descendre dans les moules placés sous les alvéoles ; pour cette opération on utilise les poussoirs 90 qui sont descendus dans les alvéoles jusqu'au niveau de la partie supérieure des moules.

Les poussoirs sont ensuite remontés, et le transporteur 18 est ramené en position basse et mis en route, après avoir éclipsé les butées 94, pour évacuer les moules pleins qui sont transférés sur un autre transporteur 110. Simultanément l'élément 16 est relevé, puis le chariot 72 est ramené à grande vitesse dans sa position de départ, les trappes 12 sont refermées et le piston du vérin 88 est ramené en position initiale. Pendant ce temps, le tapis du bac a de nouveau avancé d'un pas, une nouvelle rangée de pains a été chargé sur les palettes 22 et le même cycle d'opérations se reproduit.

Etant donné que les pains sont poussés sur les palettes par le gâteau contenu dans le bac, les pains de la dernière rangée ne peuvent pas être transférés de cette manière sur les palettes et il faut aller les prendre sur la table de sortie du bac. Pour cela, on soulève légèrement le plateau 10, à l'aide du vérin à faible course 52, puis on déplace les palettes vers le bac, au moyen des vérins 28, de façon à les glisser sous les pains, on effectue les opérations inverses, pour ramener les palettes dans leurs positions initiales, et le cycle normal peut alors débuter.

Toutes ces opérations sont effectuées automatiquement, dans l'ordre décrit, grâce à un automate programmable qui commande les différents vérins et moteurs de la machine suivant un programme préétabli.

Lorsque la production du bac est modifiée, on remplace les éléments de formage 14 et 16 et le plateau écarteur 10 par de nouveaux éléments et par un nouveau plateau adaptés aux dimensions des nouveaux pains produits.

Il est bien entendu que toutes les modifications qui peuvent être apportées au mode de réalisation décrit par l'emploi de moyens techniques équivalents entrent dans le cadre de l'invention.

- 12 -

0119127

Revendications.

1. Machine pour la mise en moules de pains de caillé produits par un bac de pré-pressage caractérisée en ce qu'elle comporte un support plan horizontal (12), un élément de formage fixe (14) placé au-dessus dudit support, un élément de formage mobile (16), ces deux éléments formant, lorsqu'ils sont assemblés, une série d'alvéoles cylindriques dont le fond est constitué par ledit support et dont la section est pratiquement identique à celle des moules, des moyens (72, 78, 82, 84, 86, 88) pour écarter et rapprocher l'un de l'autre les éléments de formage, des moyens (10, 46, 50) pour amener les pains de caillé entre les éléments de formage lorsque ceux-ci sont écartés l'un de l'autre, des moyens (18) pour amener les moules (20) sous ledit support plan (12) en alignement avec les dites alvéoles, et des moyens (60, 62, 64, 66) pour déplacer ledit support dans son plan de façon à dégager complètement l'ouverture inférieure desdites alvéoles.

2. Machine selon la revendication 1, caractérisée en ce que lesdits moyens pour amener les pains de caillé entre les éléments de formage (14, 16) comprennent un plateau (10) sur lequel les pains de caillé sont chargés à leur sortie du bac et un mécanisme (46, 50) pour amener le dit plateau au niveau dudit support plan (12) et bord à bord avec celui-ci.

3. Machine selon la revendication 2, caractérisée en ce que ledit mécanisme est constitué par des leviers (46) formant parallèlogramme articulé et dont la rotation est commandée par un ou plusieurs vérins (50).

4. Machine selon la revendication 2 ou 3, caractérisée en ce que ledit plateau (10) est formé de plusieurs palettes (22) dont le nombre est égal à celui des pains de caillé produits simultanément par le bac et dont la largeur est égale à celle d'un pain, et en ce que des moyens (38, 40)

- 13 -

0119127

sont prévus pour écarter les palettes l'une de l'autre d'une distance prédéterminée.

5. Machine selon la revendication 4, caractérisée en ce que les palettes (22) sont montées côte-à-côte sur deux longerons parallèles (32, 34) de façon à pouvoir être déplacées le long de ceux-ci, en ce que chaque palette est reliée à la palette voisine par un tirant autorisant un déplacement relatif limité des palettes et en ce qu'au moins un vérin (40) agissant sur les palettes extrèmes du plateau (10) permet de maintenir les palettes jointives ou de les écarter l'une de l'autre.

6. Machine selon la revendication 4 ou 5, caractérisée en ce que lesdites palettes (22) sont déplaçables longitudinalement au moyen de vérins (28) et comportent sur leurs côtés des tenons (30) s'engageant dans des mortaises des palettes voisines pour assurer un déplacement en synchronisme de toutes les palettes.

7. Machine selon la revendication 4, 5 ou 6, caractérisée en ce que les palettes (22) et les vérins (28, 40) commandant leurs déplacements transversaux et longitudinaux sont montés sur un châssis (32, 34) et forment avec celui-ci un ensemble remplaçable.

8. Machine selon l'une quelconque des revendications précédentes, caractérisée en ce que ledit élément de formage mobile (16) est porté par un chariot (72) déplaçable en va et vient pour rapprocher les deux éléments de formage (14 et 16) et pour les écarter l'un de l'autre.

9. Machine selon la revendication 8, caractérisée en ce que l'élément de formage mobile (16) est porté par des bras (70) montés pivotants par ledit chariot (72) et des vérins (76) commandant la rotation desdits bras permettent d'écarter ledit élément de formage mobile du plan dudit support (12).

10. Machine selon la revendication 8 ou 9, caractérisée en ce que ledit chariot (72) est tracté par une ou plusieurs chaînes (78) engrènant avec une roue dentée (82) solidaire d'un arbre moteur (84) qui peut être entraîné en rotation soit par un groupe moto-réducteur (86), pour les déplacements à vitesse rapide, soit par un vérin (88) agissant sur un bras solidaire du carter du moto-réducteur, pour les déplacements à vitesse lente, ledit groupe moto-réducteur étant équipé d'un frein permettant de solidariser l'arbre et le carter lorsque le moteur n'est pas alimenté.

11. Machine selon l'une quelconque des revendications 1 à 10, caractérisée en ce que ledit support plan est formé de deux trappes (12) dont les bords attenants se trouvent dans le plan de jonction des éléments de formage (14, 16) et qui peuvent être écartées symétriquement de ce plan pour dégager l'ouverture inférieure des alvéoles formées par lesdits éléments de formage.

12. Machine selon la revendication 11, caractérisée en ce que les trappes (12) sont munies de galets (56) roulant sur des rails horizontaux (58) et en ce qu'un système de bielles et de manivelles (60, 62) actionné par un ou plusieurs vérins (66) permet de déplacer les trappes en sens inverses et à la même vitesse.

13. Machine selon l'une quelconque des revendications précédentes, caractérisée en ce que les moyens pour amener les moules (20) sous ledit support plan (12) sont constitués par un transporteur (18) et en ce qu'un mécanisme (96, 98) permet de placer ledit transporteur soit en position haute, pour la mise en moules des pains de caillé, soit en position basse pour l'amenée et l'évacuation des moules.

14. Machine selon l'une quelconque des revendications précédentes, caractérisée en ce qu'elle comporte des poussoirs (90) pour transférer les pains de caillé des alvéoles formées par les éléments de formage (14, 16) dans les moules (20).

0119127

FIG.1

FIG. 2

FIG. 3

FIG. 4

**0119127**
Numéro de la demande

Office européen
des brevets

**RAPPORT DE RECHERCHE EUROPEENNE**

EP 84 40 0391

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | EP-A-0 056 536 (PIERRE GUERIN S.A.)<br><br>--- | | A 01 J 25/12<br>A 01 J 25/13 |
| A | FR-A-2 164 766 (HOLVRIEKA INTERNATIONAL B.V.)<br><br>--- | | |
| A | DE-B-1 189 781 (PIERRE QUERIN S.A.)<br><br>----- | | |

|  | DOMAINES TECHNIQUES RECHERCHES (Int. Cl. 3) |
|---|---|
| | A 01 J |

Le présent rapport de recherche a été établi pour toutes les revendications

| Lieu de la recherche<br>LA HAYE | Date d'achèvement de la recherche<br>14-05-1984 | Examinateur<br>NEHRDICH H.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82